# EUROPEAN PATENT SPECIFICATION

(11) **EP 0 754 156 B1**
(45) Date of publication and mention of the grant of the patent: **14.01.1998**
(21) Application number: 95914445.2
(22) Date of filing: 05.04.1995
(51) Int. Cl.: B65G 1/02

(54) **STORAGE SYSTEM**
LAGERSYSTEM
SYSTEME DE STOCKAGE

(30) Priority: 05.04.1994 GB 9406616
(43) Date of publication of application: 22.01.1997
(73) Proprietor: KHS GROUP LIMITED, Alton, Hampshire GU34 5HN (GB)
(72) Inventor: CHAPMAN, Leslie John, East Barn, Alresford, Hampshire SO24 0AR (GB)
(74) Representative: Bubb, Antony John Allen
(86) International application number: GB9500786
(87) International publication number: WO9526918

(56) References cited:
- WO-A-90/06891
- BE-A- 522 971
- GB-A- 1 111 620
- GB-A- 1 371 193
- US-A- 2 828 826
- PATENT ABSTRACTS OF JAPAN vol. 17, no. 580 (M-1500) 21 October 1993 & JP,A,05 170 309 (SOUFUKU KOKI KK) 9 July 1993

## Description

This invention concerns a storage system of the kind providing racking, more especially for the receipt of palletised goods to be handled by means of a forklift truck.

There is known, see BE - A - 522,971, a storage system for the receipt of goods to be stowed by means of a forklift truck comprising a wheeled storage module mounted on a fixed track coextensive with the module; and a portable, demountable, track assembly capable of being engaged with the track on which the module is mounted thereby enabling displacement of the module by a distance at least equal to its own length in order that the sides of the module are accessible for unloading or loading by means of the forklift truck.

In such an arrangement, the portable demountable track assembly is required to be engaged between the opposite ends of two frameworks within which are located fixed tracks for the storage modules, the arrangement being such that the demountable track assembly must be engaged between the two free ends of corresponding fixed tracks provided in the frameworks. Such an arrangement therefore requires an accurate alignment of the frameworks in order to enable interengagement with the mountable track assembly. The arrangement also requires that the demountable track assembly be self-supporting between the frameworks, and thus the available space that can be spanned by the demountable track assembly is relatively limited.

There is further known, see GB - A -371 193, a storage racking system comprising a plurality of wheeled storage modules provided with cantilever racks for supporting goods to be handled by a forklift truck, the storage modules being mounted on fixed tracks that enabled displacement of modules to provide access for loading and unloading by a forklift truck. In such a system, the wheeled modules are free standing, but in order to enable displacement of the modules, a permanent fixed track is required to be embedded in the floor of the storage area.

It is accordingly an object of the present invention to provide an improved storage system wherein a clear space can be provided at one end of a wheeled storage module, without the requirement for the provision of a permanent trackway in said space.

This object is achieved by the characterising features of Claim 1.

For loading of the modules the demountable rail assembly is placed temporarily in alignment with one of the modules, which is then towed onto the temporary rail assembly by the forklift truck, for loading. After returning the loaded module to its permanent rails, the demountable rail assembly can be removed to leave clear access for vehicles.

Further preferred features and advantages of the arrangement in accordance with the invention will become apparent from the following description taken in conjunction with the accompanying drawings, in which:
Figure 1 is a side elevation showing the general arrangement of a storage system in accordance with the invention,
Figure 2 is an end elevation in the direction of the arrow A of Fig. 1,
Figure 3 is a plan view of a demountable rail assembly for use in the system of Figs. 1 and 2,
Figure 4 shows a detail of Fig. 3 to a larger scale,
Figure 5 is a side elevation corresponding to Fig. 4,
Figure 6 is a sectional elevation taken along the line VI-VI of Fig.3 and showing a rail lifting bar moved into an elevated position,
Figure 7 is a view of a further detail of Fig. 3, shown on an enlarged scale,
Figure 8 is a side elevation corresponding to Fig. 7,
Figure 9 is side elevation illustrating the attachment of a rail of the assembly of Fig. 3 to a mounting rail of a movable module of the storage system,
Figure 10 is an end view of a component of the assembly shown in Fig. 9,
Figure 11 is an end view taken in the direction of the arrow B of Fig. 1 illustrating a component of the wheeled module, and
Figure 12 is a plan view corresponding to Fig. 11.

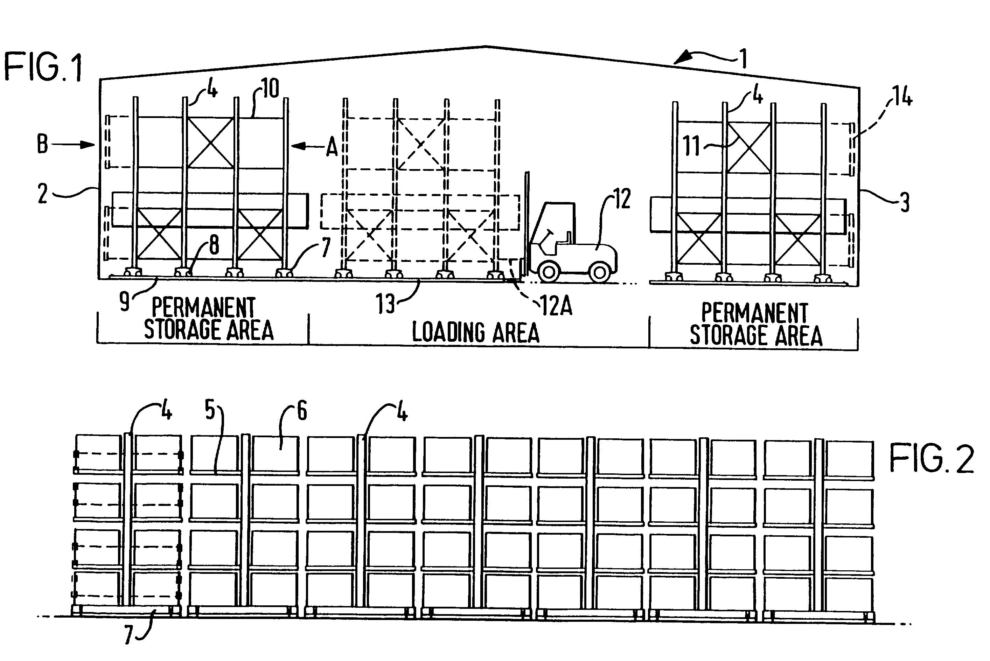

Referring to Fig. 1, the shell of a warehouse is indicated diagrammatically at 1, and there are provided adjacent two opposite walls 2 and 3 thereof in each case an array of tiered racking systems comprising upright pillars 4 from which extend lateral cantilever arms 5 (see Fig. 2) which, in known manner, form racks upon which can be loaded palletised goods indicated diagrammatically at 6.

Racking systems of the kind illustrated are normally provided at fixed locations in a row and aisle formation to enable loading and unloading by means of a forklift truck. In the present case, however, each upright 4 is located upon a transverse chassis 7 provided with castors 8 engaging a pair of rails 9 mounted to the floor of the building. The uprights 4 are assembled into modules by means of struts and cross braces indicated diagrammatically at 10 and 11.

As can be seen from Fig. 2, the racking modules are located closely laterally adjacent to one another along each wall 2 or 3 of the building. The rails 9 upon which the modules are supported terminate at the ends of the latter, so that with the modules in the positions indicated in full lines in Fig. 1, there is between them a clear floor area to enable a forklift truck to be manoeuvred, as indicated at 12.

Each set of rails 9 is capable of being extended by means of a demountable rail assembly 13 to be described in more detail below, so that a single module can be moved from the rails 9 onto rails 13 interconnecting therewith, as shown in broken lines in Fig. 1. With the wheeled module in this position, the sides of the racking module are accessible for loading or unloading of the racks by means of the forklift truck. A loaded module can then be returned to the rails 9 and the rail assembly 13 removed to leave clear floor space. Movement of a module is effected by the forklift truck 12 which is linked thereto by a removable rigid tow bar shown diagrammatically at 12A.

Each of the racking modules is provided at the end that is to be adjacent a wall 2 or 3 with one or more end gauges indicated in broken lines at 14 to prevent the misalignment of goods to be located on the racking system so that collision with the walls 2 and 3 of the building is prevented when each module is returned to its storage position. The end gauges will be described in more detail below.

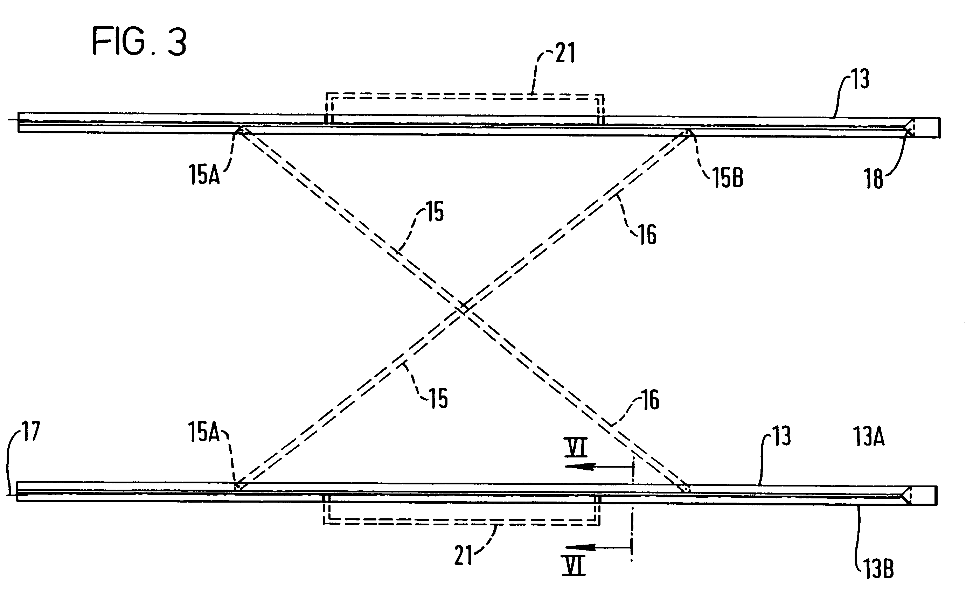

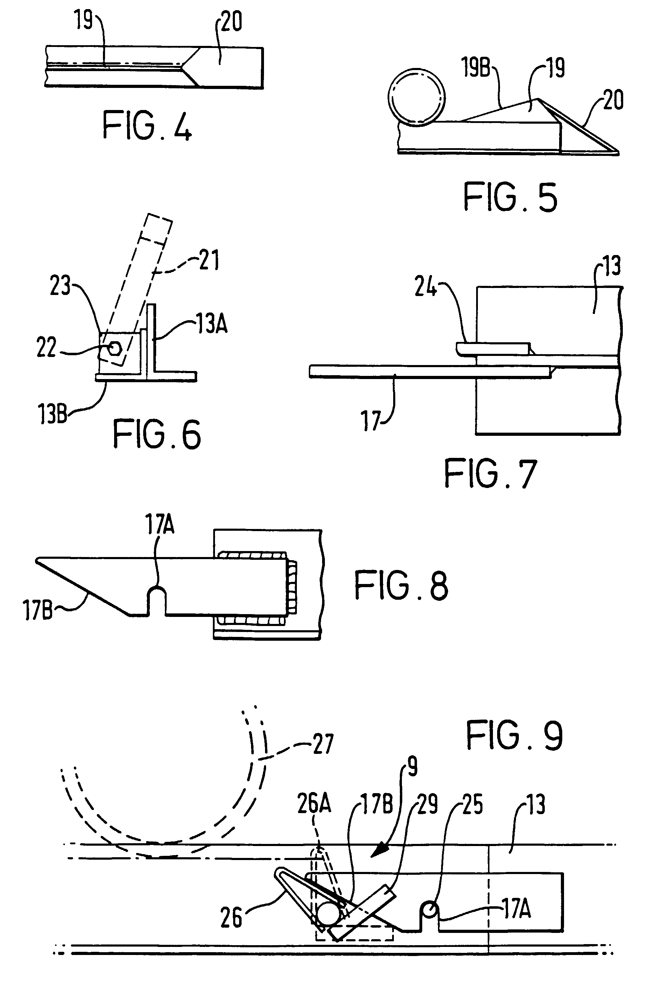

Referring to Fig. 3 there is shown a plan view of the demountable rail assembly 13. It will be understood that the basic rail section is similar to that of the rails 9, and those additional elements that are required to be added to the rails 9 to form the demountable assembly are shown in broken lines. Each rail 13 is formed of a pair of sections of steel angle 13A, 13B welded back to back as shown more clearly in Fig. 6. The rails are held in spaced relation by means of two diagonal cross braces 15 of flat bar, each of which is pivotally secured at one end 15A to the channel section 13A by means of a bolt and a self locking nut. The other end 15B of each cross brace is removably engaged over a locating pin upstanding from the base flange of the angle 13A. The rails 13 can be disassembled by removing the ends 15B of the cross braces from the corresponding pins and folding the cross braces to lie flat against the base flange of the angle 13A. Each cross brace 15 has an aperture 16 positioned to locate over the aforementioned locating pin of its own rail, when in the folded position.

The left hand end of each rail 13 as viewed in Fig. 3 incorporates a connector 17 to be described in more detail below for releasable engagement with a corresponding end of a rail 9. The right hand end of each rail 13 is provided with an end ramp 18 to prevent a wheeled module from being unintentionally drawn over the free end of the rail. As shown in Figs. 4 and 5 each ramp comprises a steel plate 19 welded to the rail 13A and having an inclined upper edge 19B. A section of flat bar 20 is folded to a V-shape and secured between the base of the rail and the apex of the ramp 19.

To enable transportation of the rails 13 when disassembled, each rail is provided with a U-shaped lifting bar 21 located on horizontally extending bolts 22 in brackets 23 welded to the rail 13B as shown in Fig. 6. Each bar 21 can thus be pivoted from a horizontal position shown in Fig. 3, in which it is clear of the path of the racking module, to an upright position as shown in Fig. 6, in which it can be engaged by the forks of a forklift truck for transportation.

Figs. 7 and 8 show more clearly the connector 17 for engagement with a rail 9. The connector 17 comprises a projecting portion of flat bar welded to the upright of the rail 13 and having a downwardly open slot 17A as shown in Fig. 8. The projecting nose of the connector also has an inclined cam surface 17B for the purpose described below. On the opposite side of the upright rail 13 is welded a further portion 24 of flat plat so arranged that the upright of a rail 9 becomes located between the plates 17 and 24.

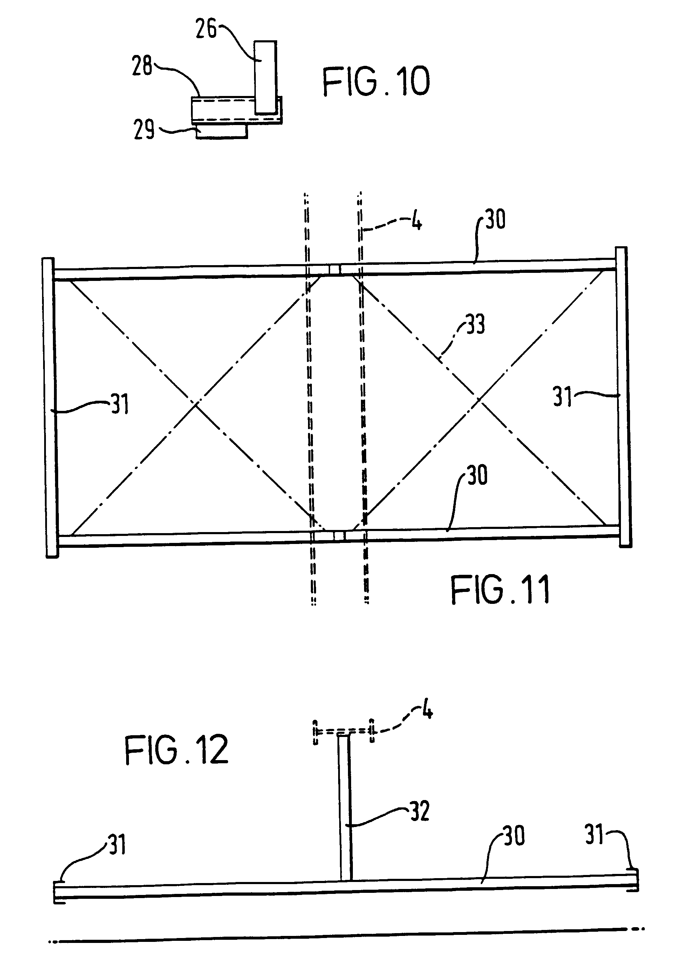

As shown in Fig. 9, the slot 17A can engage over a laterally projecting pin 25 on rail 9 in order to secure the two rails 13 and 9 end to end, and, when in this position, the cam surface 17B serves to depress a pivoted end stop 26 that normally occupies a position shown in broken lines wherein an upper end 26A is located in the path of a castor 27 of the wheeled racking module to retain the latter in position on the rails 9. As shown more clearly in Fig. 10 the end stop 26 comprises a sleeve 28 for pivotal engagement over a transverse pin (not shown) projecting from the upright of rail 9, and a counterweight 29 that normally biases the stop 26 into an upright position. The stop 26 is formed by a section of steel bar folded to a V-shape and welded to the sleeve 28.

Referring to Figs. 11 and 12, the end gauge 14 referred to above is illustrated in greater detail. The end gauge comprises a pair of transverse rails 30 of rectangular section steel bar between the ends of which are welded upright members 31 of channel section that are painted with a high visibility colour such as orange. The rails 30 are secured in spaced relation to uprights 4 by means of struts 32 likewise of rectangular section steel. The rails 30 may if desired be interconnected by diagonal straps indicated diagrammatically at 33 in Fig. 11.

It will be seen from the above description that there is provided a novel and versatile storage system which makes optimum use of available space whilst facilitating side loading of racking modules by means of a forklift truck and also providing clear floor space for vehicular access and manoeuvring of forklift truck.

## Claims

1. A storage system for the receipt of goods to be stowed by means of a forklift truck comprising:
a wheeled storage module (4,10,11) mounted on a fixed track (9) coextensive with the module; and
a portable, demountable, track assembly (13) capable of being engaged with the track (9) on which the module is mounted thereby enabling displacement of the module by a distance at least equal to its own length in order that the sides of the module are accessible for unloading or loading by means of the forklift truck, characterised in that the said assembly comprises a pair of rails (13) held in spaced relation to each other by removable cross-bracing (15,16).

2. A system as claimed in Claim 1, wherein the track assembly (13) has at one end connector means (17) for releasable engagement with a corresponding end of the fixed track (9), and at the other end is provided with stop means (19,20) to prevent derailment of the module.

3. A system as claimed in Claim 1 or 2, wherein each rail (13) of the assembly is provided with a U-shaped lifting bar (21) which can be engaged by the tines of the forklift truck.

4. A system as claimed in Claim 2 or Claim 3, wherein the connector means (17) comprises projecting portions of flat bar (17,24) welded to either side of each rail, at least one portion (17) having a downwardly open slot (17a) formed therein for engagement over a laterally projecting pin (25) on the corresponding end of the coextensive rails (9).

5. A system as claimed in any preceding Claim, wherein the storage module comprises a plurality of uprights (4) located on a chassis (7) provided with castors (8) engaging the rails (9), and lateral cantilever arms (5) extending from each upright to support tiered racks upon which can be loaded goods.

6. A system as claimed in Claim 5, wherein the module (4,10,11) is provided at the end remote from the track assembly (13) with at least one end gauge (14) to prevent collision of stored goods with the surroundings of the system.

7. A system as claimed in Claim 6, wherein the end gauge (14) comprises a transverse vertical rectangular framework (30,31,32) secured in spaced apart relation to the remote end of the module.

## Patentansprüche

1. Regalsystem zur Aufnahme von mittels eines Gabelstaplers zu verstauenden Waren, versehen mit:
einem mit Rädern versehenen Speichermodul (4, 10, 11), das auf einer festen Schiene (9) montiert ist, die koextensiv zu dem Modul verläuft; und
einer tragbaren, demontierbaren Schienenbaugruppe (13), die mit der Schiene (9) in Eingriff gebracht werden kann, auf der das Modul montiert ist, so daß das Modul um eine Strecke verlagert werden kann, die mindestens gleich der Länge des Moduls ist, so daß die Seiten des Moduls zum Entladen oder Beladen mittels des Gabelstaplers zugänglich sind, dadurch gekennzeichnet, daß die Baugruppe zwei Schienen (13) aufweist, die mittels einer abnehmbaren Kreuzverstrebung (15, 16) in Abstand zueinander gehalten werden.

2. System nach Anspruch 1, wobei die Schienenbaugruppe (13) an einem Ende eine Verbindungsanordnung (17) zum lösbaren Eingriff mit einem entsprechenden Ende der festen Schiene (9) aufweist und am anderen Ende eine Anschlaganordnung (19, 20) vorgesehen ist, um ein Entgleisen des Moduls zu verhindern.

3. System nach Anspruch 1 oder 2, wobei jede Schiene (13) der Baugruppe mit einer **U**-förmigen Hebestange (21) versehen ist, die mit den Zinken des Gabelstaplers in Eingriff gebracht werden können.

4. System nach Anspruch 2 oder 3, wobei die Verbindungsanordnung (17) vorstehende Abschnitte einer flachen Stange (17, 24) aufweist, die an jeder Seite jeder Schiene angeschweißt sind, wobei in mindestens einem Abschnitt (17) ein sich nach unten öffnender Schlitz (17a) ausgebildet ist, um in Eingriff über einen seitlich vorstehenden Stift (25) an dem entsprechenden Ende der koextensiv verlaufenden Schienen (9) zu kommen.

5. System nach einem der vorhergehenden Ansprüche, wobei das Speichermodul eine Mehrzahl von Pfosten (4), die auf einem Chassis (7) montiert sind, das mit Rollen (8) versehen ist, die in Eingriff mit den Schienen stehen, sowie seitlichen Auslegerarmen (5) aufweist, die sich von jedem Pfosten aus erstrecken, um Paletten abzustützen, auf welchen Waren angeordnet werden können.

6. System nach Anspruch 5, wobei das Modul (4, 10, 11) am dem von der Schienenbaugruppe (13) entfernt liegenden Ende mit mindestens einer Tiefenlehre (14) versehen ist. um eine Kollision von gelagerten Waren mit der Umgebung des Systems zu verhindern.

7. System nach Anspruch 6, wobei die Tiefenlehre (14) einen quer verlaufenden senkrechten Rahmen (30, 31, 32) aufweist, der in Abstand zu dem entfernt liegenden Ende des Moduls angebracht ist.

## Revendications

1. Installation de stockage pour la réception de marchandises à gerber au moyen d'un chariot élévateur à fourche, comprenant :
- un module de stockage sur roues (4, 10, 11) monté sur une voie fixe (9) de même longueur que le module ; et
- un ensemble de voie démontable et portable (13) pouvant coopérer avec la voie (9) sur laquelle est monté le module, ce qui permet ainsi de déplacer le module d'une distance au moins égale à sa propre longueur afin que les côtés du module soient accessibles à des fins de déchargement ou de chargement par le chariot élévateur à fourche,
caractérisée en ce que ledit ensemble comprend une paire de rails (13) maintenus espacés l'un de l'autre par un entretoisement en croix amovible (15, 16).

2. Installation selon la revendication 1, dans laquelle l'ensemble de voie (13) a, à une extrémité, des moyens de connexion (17) pour coopérer de façon libérable avec une extrémité correspondante de la voie fixe (9) et, à l'autre extrémité, des moyens de butée (19, 20) pour empêcher le module de dérailler.

3. Installation selon la revendication 1 ou la revendication 2, dans laquelle chaque rail (13) de l'ensemble est équipé d'une barre de levée en forme de U (21) avec laquelle peuvent coopérer les dents du chariot élévateur à fourche.

4. Installation selon la revendication 2 ou la revendication 3, dans laquelle les moyens de connexion (17) comprennent des portions saillantes de barre plate (17, 24) soudées sur l'un et l'autre côté de chaque rail, au moins une portion (17) ayant une encoche ouverte vers le bas (17a) formée dans elle pour coopérer avec une broche (25) se projetant latéralement sur l'extrémité correspondante des rails de la voie (9).

5. Installation selon l'une des revendications précédentes, dans laquelle le module de stockage comprend une multiplicité de montants (4) montés sur un châssis (7) équipé de roues (8) coopérant avec les rails (9), et des bras latéraux en porte-à-faux (5) s'étendant de chaque montant pour supporter des rayons disposés en étages sur lesquels on peut charger des marchandises.

6. Installation selon la revendication 5, dans laquelle le module (4, 10, 11) est équipé, au niveau de son extrémité éloignée de l'ensemble de voie (13), d'au moins un calibre terminal (14) pour empêcher les marchandises stockées d'entrer en collision avec l'environnement de l'installation.

7. Installation selon la revendication 6, dans laquelle le calibre terminal (14) comprend un cadre rectangulaire vertical transversal (30, 31, 32) fixé à une certaine distance de l'extrémité éloignée du module.
